# EUROPÄISCHE PATENTSCHRIFT

(11) **EP 1 570 719 B1**
(45) Veröffentlichungstag und Bekanntmachung des Hinweises auf die Patenterteilung: **10.01.2007**
(21) Anmeldenummer: 04005226.8
(22) Anmeldetag: 05.03.2004
(51) Int. Cl.: A01D 34/73, B26B 25/00, A01G 3/053, A01G 3/06, B26D 7/00, B26D 7/24, B23D 35/00

(54) **Schneidvorrichtung, insbesondere Rasenmäher**
Cutting apparatus, especially lawnmower
Appareil de coupage, en particulier tondeuse â gazon

(43) Veröffentlichungstag der Anmeldung: 07.09.2005
(73) Patentinhaber: OUTILS WOLF, 67165 Wissembourg Cedex (FR)
(72) Erfinder:
(74) Vertreter: Brommer, Hans Joachim

(56) Entgegenhaltungen:
- US-A- 2 749 909
- US-A- 3 610 304
- US-A- 4 070 941
- US-A- 5 447 086

## Beschreibung

Die Erfindung geht aus von einer Schneidvorrichtung, insbesondere Rasenmäher, mit den Merkmalen im Oberbegriff des Patentanspruches 1.

Bei Rasenmähern besteht die Notwendigkeit, die Messer von Zeit zu Zeit nachzuschleifen, um einen glatten, sauberen Schnitt des Grases zu gewährleisten. Bei montiertem Zustand der Messer ist dieses Nachschleifen nur notdürftig möglich. Normalerweise werden die Messer abmontiert und in einer speziellen Schleifvorrichtung eingespannt, damit der richtige Schnittwinkel über der Messerlänge eingehalten wird.

Herkömmliche Schraubverbindungen des Messers sind nach längerer Gebrauchszeit mit Schnittgut und Erde zugesetzt, so dass die Demontage des Messers erschwert wird. Es ist deshalb bereits durch die DE 195 20 618 eine schraubenlose Messerhalterung bekannt geworden, bei der die Messer ohne den Gebrauch von Werkzeugen ausgewechselt werden können.

Diese bekannte Messerhalterung besteht aus einer motorisch angetriebenen Scheibe, die zwei nach unten ragende Zapfen trägt, auf deren überstehende Enden jeweils ein Messer aufgesteckt ist, so dass es schwenkbar an seinem Zapfen gelagert ist. Unterhalb der Messer befindet sich eine verdrehbare Platte, die im Bereich der Zapfen jeweils eine in Umfangsrichtung laufende Nut aufweist, so dass sie relativ zu der Scheibe mit den Zapfen und den Messern verdrehbar ist und dabei die Enden der Zapfen in ihrer Nut aufnimmt und in eingedrehter Stellung die Messer von unten abstützt. Um die genannte Platte in ihrer eingedrehten, die Messer haltenden Stellung zu sichern, läuft die Nut in einer Vertiefung aus, in welche der zugehörige Zapfen einrastet. Diese Rasterbindung hemmt das Zurückdrehen der Platte, kann diese Rückdrehung aber nicht ausschließen, wenn die Platte durch zufällige äußere Einwirkung im Freigabesinn belastet wird.

Außerdem benötigt die verdrehbare Platte eine Abstützung von unten. Diese Abstützung erfolgt durch eine unterhalb angeordnete Haube. Diese Haube überdeckt die verdrehbare Platte und erschwert dadurch ihre Zugänglichkeit, wenn die Messer demontiert werden sollen.

Eine Schneidvorrichtung mit den Merkmalen des Oberbegriffs des Anspruchs ist durch die US-A-3610304 für das Schneiden von Nahrungsmitteln bekannt geworden. Dabei erfolgt die Verbindung zwischen dem scheibenförmigen Messer und seinem als Welle ausgebildeten Messerträger durch einen zentral angeordneten Bajonett-Verschluss und dieser Bajonett-Verschluss wirkt mit einem zusätzlichen Verriegelungselement zusammen. Dieses Verriegelungselement greift am Umfang des scheibenförmigen Messers an.

Hiervon ausgehend liegt die Aufgabe der vorliegenden Erfindung darin, ein Verriegelungselement anzugeben, das ohne Werkzeuge lösbar ist, dabei aber in der Handhabung leicht und zugleich zuverlässig ist als. Nicht zuletzt soll sich das erfindungsgemäße Verriegelungselement durch kostengünstige Herstellung auszeichnen.

Diese Aufgabe wird erfindungsgemäß dadurch gelöst, dass das Verriegelungselement in seiner einen Stellung die Relativdrehung zwischen Messer und Messerträger blockiert, in seiner anderen Stellung die Relativdrehung hingegen freigegeben wird.

Dadurch erhöht sich die Sicherheit des Bajonett-Verschlusses erheblich, weil das Verriegelungselement eine echte formschlüssige Verriegelung erzeugt, wogegen im bekannten Fall nur eine Führung in Umfangsrichtung vorliegt.

Für die konstruktive Ausbildung des Verriegelungselementes bieten sich dem Fachmann verschiedene Möglichkeiten. Als besonders günstig hat es sich aber erwiesen, das Verriegelungselement als federnd gelagerten Druckknopf auszubilden, der durch die Federkraft in der Verriegelungsstellung gehalten wird und nur dann, wenn er entgegen der Federkraft eingedrückt wird, die Relativdrehung freigibt.

Theoretisch könnte das Verriegelungselement am Messer selbst gelagert sein. Konstruktiv ist es aber wesentlich günstiger, das Verriegelungselement mit samt seiner Federung im Messerträger zu lagern.

Eine andere zweckmäßige Weiterbildung der Erfindung besteht darin, die Relativdrehung zwischen Messer und Messerbalken so zu wählen, dass die Freigabe des Messers nur dann erfolgt, wenn das Messer in Schneidrichtung verdreht wird. Dadurch wirken sich die beim Aufprall des Messers auf Hindernisse entstehenden Stöße nicht im Sinne einer Öffnung des Bajonett-Verschlusses aus und das Verriegelungselement wird ebenfalls nicht durch diese Stöße belastet.

Das Messer selbst ist vorzugsweise als durchgehender Messerbalken ausgebildet, der an zwei entgegengesetzten Außenkanten angeschliffen ist und in seinem Zentrum mit dem Bajonett-Verschluss zusammenwirkt, insbesondere indem er eine zentrale Öffnung mit radialen Aussparungen aufweist und zumindest eine dieser Aussparungen mit dem Verriegelungselement zusammenwirkt

Damit der Bajonett-Verschluss auch nach längerer Betriebszeit seine Funktionsfähigkeit, insbesondere seine Leichtgängigkeit beibehält, empfiehlt es sich, dass das Verriegelungselement nahe seinem der Betätigung dienenden Ende eine Dichtung gegenüber dem Messer und/oder dem Messerträger aufweist. Dadurch wird das Eindringen von Schnittgut und Erde ausgeschlossen. Zu dem gleichen

Zweck kann auch zwischen Messerträger und Messer eine Dichtung angeordnet sein.

Weitere Merkmale und Vorteile der Erfindung ergeben sich aus der nachfolgenden Beschreibung eines Ausführungsbeispieles anhand der Zeichnungen und aus den Zeichnungen selbst; dabei zeigt
- Figur 1: eine Ansicht des Messers axial von unten;
- Figur 2: eine Seitenansicht des Messers gemäß Figur 1;
- Figur 3: eine Ansicht des Messers gemäß Figur 1, jedoch in halbmontiertem Zustand am Messerträger;
- Figur 4: die gleiche Ansicht wie Figur 3, jedoch in fertigmontierter Position;
- Figur 5: einen Axialschnitt längs der Linie A-A in Figur 4;
- Figur 6: eine Ansicht auf den Messerträger axial von unten;
- Figur 7: eine Seitenansicht auf den Messerträger gemäß Figur 6;
- Figur 8: einen Radialschnitt durch Messer und Messerträger;
- Figur 9: eine Ansicht auf das Messer von oben mit separaten Anschlagplatten.

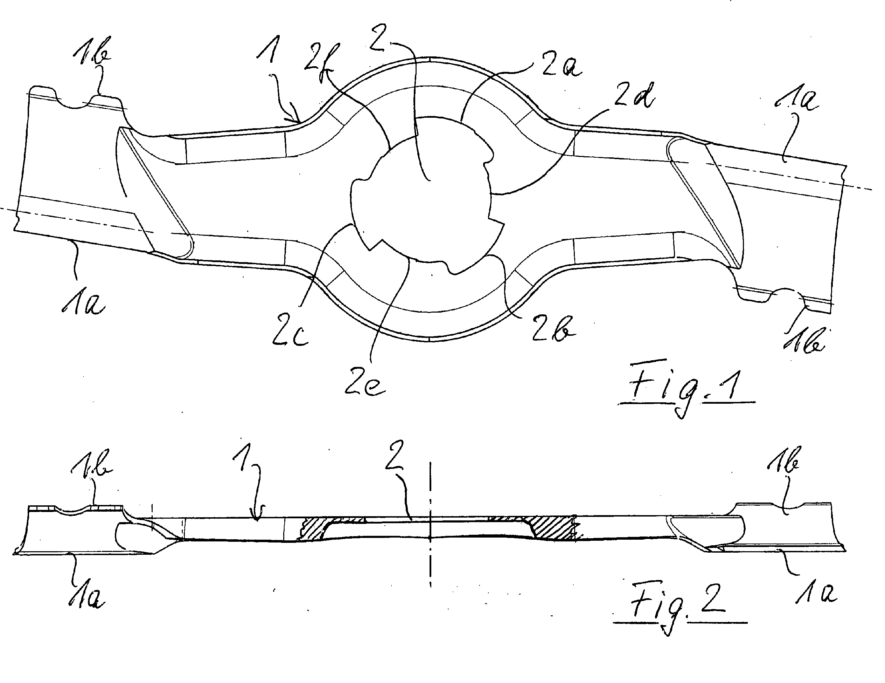

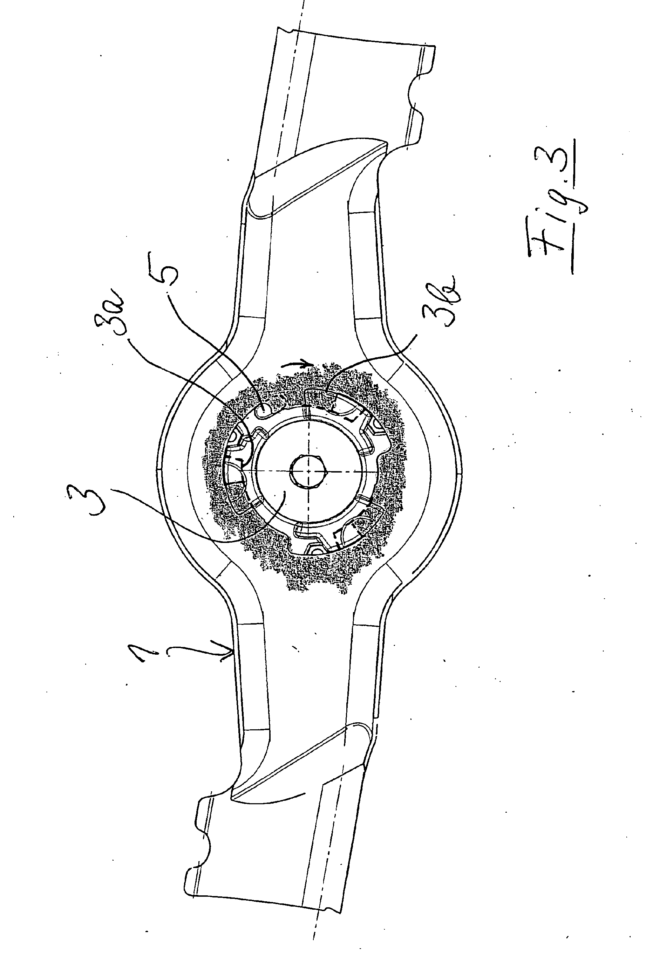

Das in den Figuren 1 und 2 dargestellte Messer in Form eines Messerbalkens 1 hat hinsichtlich seiner Außenkontur und seiner Profilierung die an sich bekannte Form, insbesondere mit zwei diagonal gegenüberliegenden äußeren Schneidkanten 1a, die an ihren in Umlaufrichtung rückwärtigen Enden in nach oben abgebogenen Flügeln 1b auslaufen. Im Zentrum des Messerbalkens befindet sich eine Bohrung 2. Diese Bohrung hat erfindungsgemäß an ihrem Umfang mehrere Aussparungen 2a, 2b, 2c bzw. Vorsprünge 2d, 2e, 2f, die mit dem später noch zu beschreibenden Messerträger im Sinne eines Bajonett-Verschlusses zusammenwirken. Dieses Zusammenwirken erschließt sich aus den folgenden Figuren.

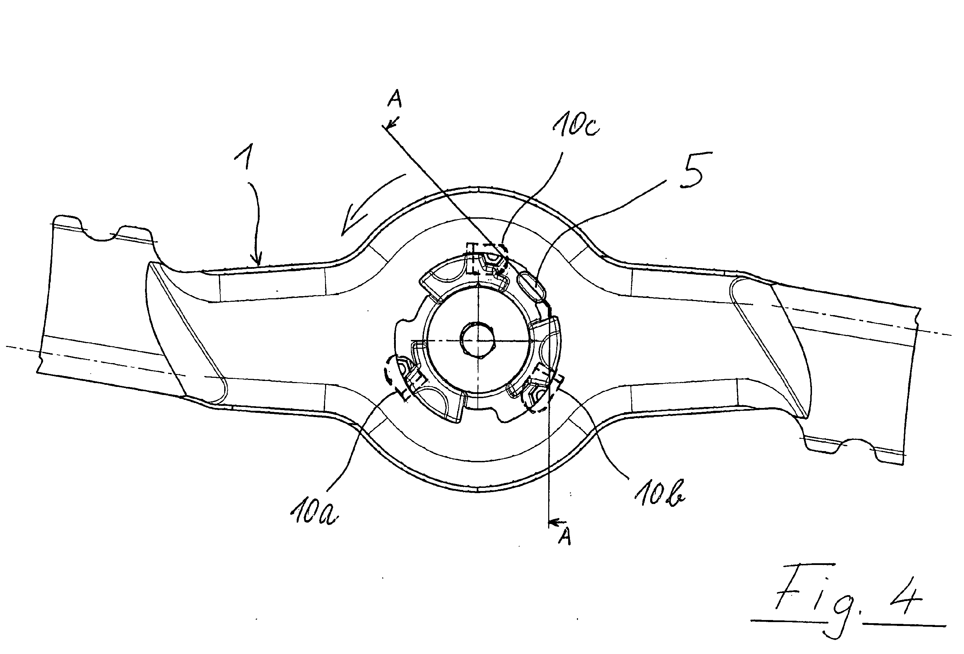

Figur 3 zeigt ein Zwischenstadium, bei dem der Messerbalken auf seinem Messerträger 3 teilweise montiert ist. Man erkennt dort, dass der Messerträger 3 über Teile seines Umfanges einen axial vorstehenden zylindrischen Bund 3a aufweist. Dieser Bund 3a korrespondiert mit den inneren Umfangsabschnitten der Bohrung 2 des Messerbalkens und definiert dessen Drehachse. Statt dessen oder zusätzlich kann die verdrehbare Lagerung auch durch äußere Umfangsflächen 3b des Messerträgers erfolgen, die mit den Umfangsrändern der Aussparungen 2a, 2b, 2c des Messerbalkens korrespondieren.

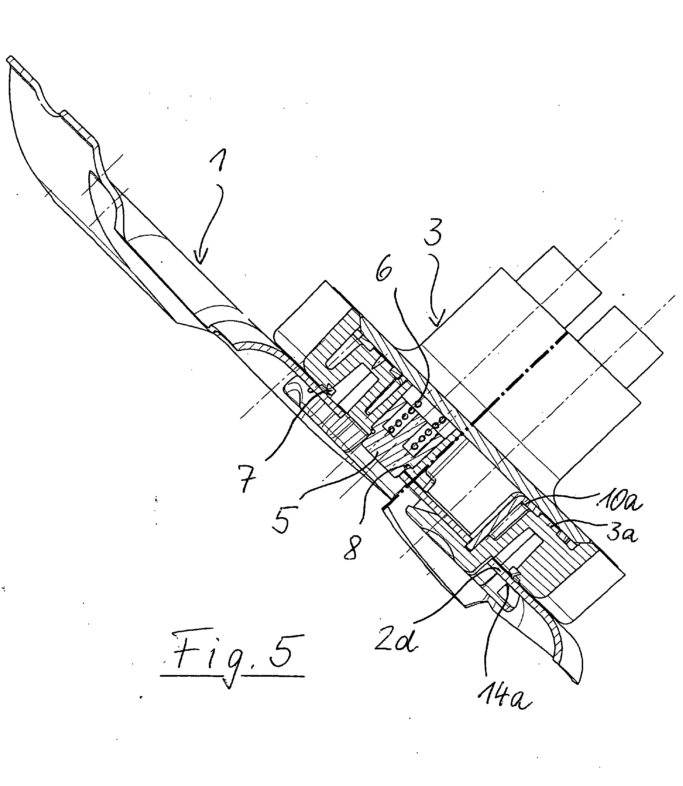

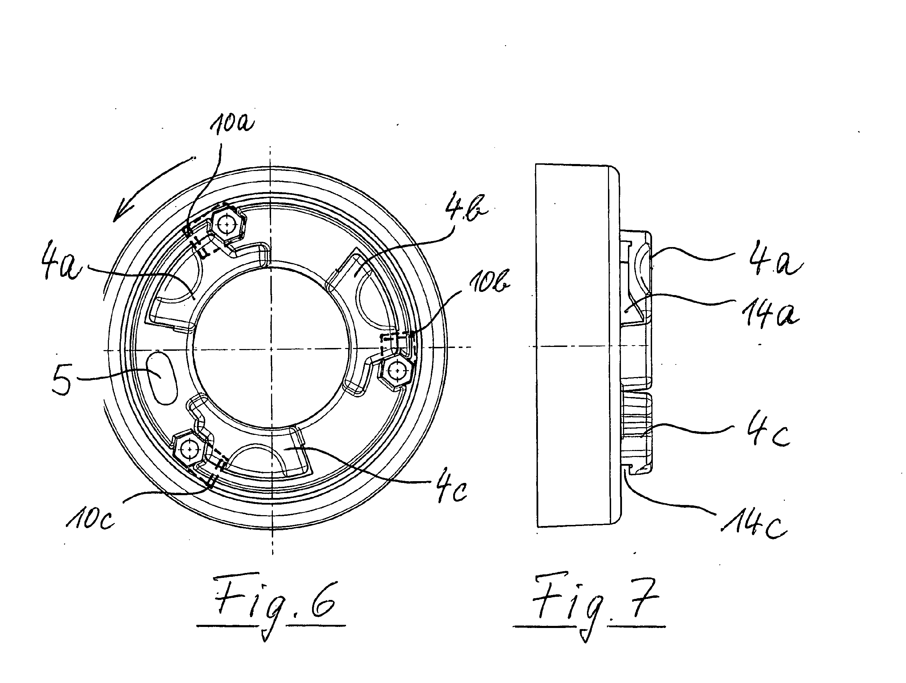

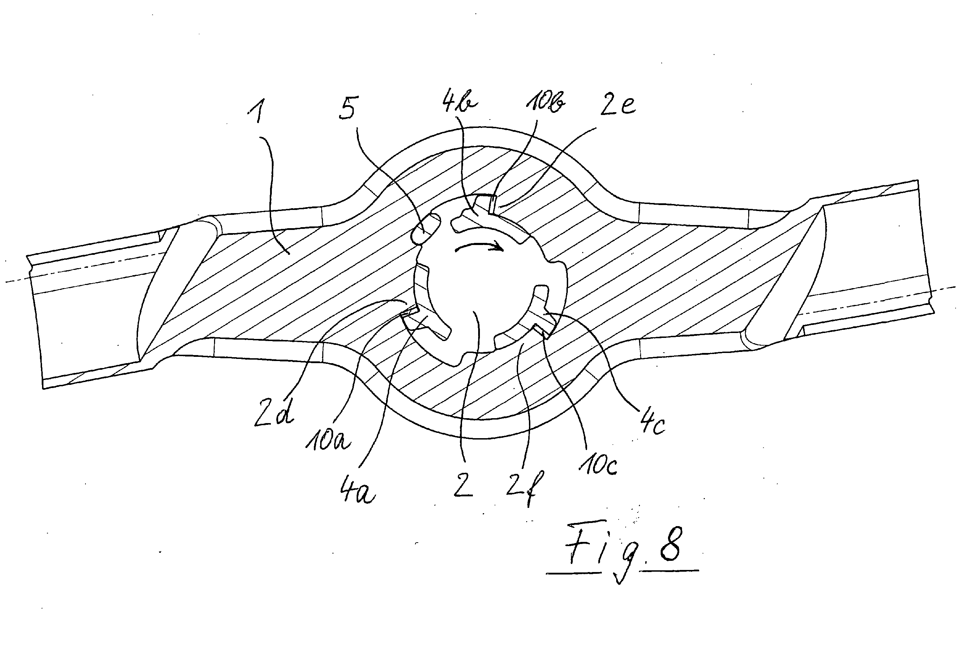

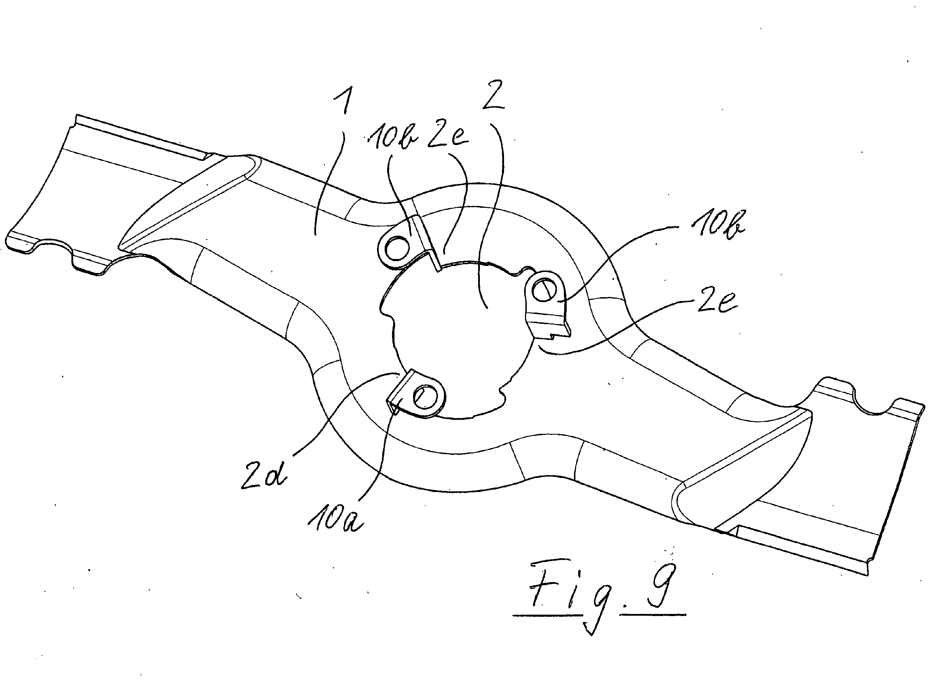

Zum besseren Verständnis wird nun auf die Figuren 6 und 7 eingegangen, die den Messerträger ohne Messerbalken zeigen. Wesentlich ist hier, dass der Messerträger mehrere axial vorstehende, in der Betriebsposition nach unten ragende Vorsprünge 4a, 4b und 4c aufweist, deren Form und Position derart mit den Aussparungen 2a, 2b, 2c des Messerbalkens korrespondiert, dass die Vorsprünge beim Aufstecken des Messerbalkens auf den Messerträger in die genannten Aussparungen des Messerbalkens eintauchen. Wesentlich ist außerdem, dass die Vorsprünge 4a bis 4c an ihrem Fußbereich jeweils einen in Umfangsrichtung laufenden Schlitz aufweisen, vergleiche Figur 7, wo die Schlitze 14a und 14c sichtbar sind. Diese Schlitze sind in der einen Umfangsrichtung offen, und zwar dort, wo in Figur 6 jeweils ein Pfeil eingezeichnet ist, wogegen sie am anderen Umfangsende verschlossen sind. Die genannten Schlitze sind so positioniert und geformt, dass bei auf den Messerträger 3 aufgelegtem Messerbalken die radial innerhalb der Aussparungen 2a, 2b, 2c liegenden Umfangsbereiche 2d, 2e und 2f bei einer Verdrehung des Messerbalkens in die Schlitze 14a bis 14c eindringen. Dieser teilweise eingedrehte Zustand der inneren Umfangsbereiche des Messerbalkens in die Schlitze des Messerträgers ist in Figur 3 dargestellt; der vollständig eingedrehte Zustand, bei der die genannten Umfangsbereiche des Messerbalkens an den verschlossenen Enden der Schlitze 14a bis 14c anstoßen, ist in Figur 4 dargestellt. Dabei wird der Messerhalter in Axialrichtung formschlüssig und nahezu spielfrei durch die Schlitze 14a bis 14c gehalten, vergleiche hierzu auch den Axialschnitt in Figur 5.

In Umfangsrichtung ist das Messer zunächst nur in derjenigen Richtung arretiert, in der die radialen Übergänge zwischen den inneren und äußeren Umfangsbereichen 2a bis 2f des Messerbalkens an den geschlossenen Enden der Schlitze 14a bis 14c anstoßen. Damit nun ein Herausdrehen des Messerbalkens aus den Schlitzen verhindert wird, ist im Messerträger zumindest ein axial verschiebbares Verriegelungselement in Form eines Druckknopfes 5 angeordnet. Dieser Druckknopf steht durch Federkraft nach unten aus dem Messerträger vor und ist so positioniert, dass er beim Aufstecken des Messerbalkens auf den Messerträger von der Oberfläche des Messers in den Messerträger hineingedrückt wird. Bei der anschließenden Verdrehung des Messers wird die Überdeckung des Druckknopfes durch das Messer allmählich aufgehoben: So ist der Druckknopf in Figur 3 nach der halben Eindrehung des Messers in die Schlitze hinein bereits zur Hälfte sichtbar, wogegen er nach dem vollständigen Eindrehen des Messers überhaupt nicht mehr vom Messer abgedeckt wird. Er springt dann in seine vorstehende Position, so dass er als Anschlag gegen ein Zurückdrehen des Messers aus den Schlitzen 14a bis 14c fungiert.

Die beschriebene Arretierung des Messer in beiden Umfangsrichtungen erfolgt derart, dass das Eindrehen des Messerbalkens in die Schlitze 14a bis 14c entgegen der Schneidrichtung des Messers erfolgt. Dadurch wird das Antriebsmoment, das in den Figuren 4 und 6 jeweils durch einen Pfeil angedeutet ist, über die starren Vorsprünge 4a bis 4c des Messerträgers übertragen, wogegen das Verriegelungselement 5 nahezu kräftefrei bleibt.

Zur Demontage des Messerbalkens ist es lediglich notwendig, den Druckknopf 5 einige Millimeter in den Messerträger hineinzudrücken, so dass er das Messer nicht mehr blockiert. Das Messer kann dann in Schneidrichtung aus den Schlitzen 4a bis 4c herausgedreht und bereits abgenommen werden.

Noch einfacher ist die Montage des Messerbalkens, weil er beim Aufsetzen auf den Messerträger bereits von sich aus den Druckknopf 5 in den Messerträger hineindrückt.

Ein wichtiges Detail ist noch aus den Figuren 8 und 9 in Verbindung mit Figur 5 zu erkennen. In Figur 8 legt der Horizontalschnitt längs der Messerebene die drei Vorsprünge 4a, 4b und 4c des Messerträgers frei, die das Antriebsmoment vom Messerträger auf das Messer übertragen. Außerdem erkennt man dort das Verriegelungselement 5 in Form eines Druckknopfes, der in seiner nichteingedrückten Stellung ein Herausdrehen des Messers aus dem Bajonett-Verschluss verhindert. Wesentlich ist nun, dass die Vorsprünge 4a bis 4c nicht unmittelbar an den nach innen ragenden Vorsprüngen 2d, 2e und 2f entlang der Messerbohrung 2 angreifen, sondern dass dieser Angriff unter Zwischenschaltung von Anschlagplatten 10a, 10b und 10c erfolgt. Diese Anschlagplatten bestehen aus einem stabilen Metall wie das Messer 1, insbesondere aus Eisen, wogegen der Messerträger 3 bevorzugt aus Leichtmetall, insbesondere Aluminium hergestellt wird. Die Anschlagplatten, die zweckmäßig separate Teile sind, haben den Vorteil, dass das harte Messer beim Aufprall auf Hindernisse den Stoß nicht direkt auf den Messerträger weitergeben kann.

Konstruktiv bieten sich für die Gestaltung der Anschlagplatten 10a bis 10c unterschiedliche Möglichkeiten. Im Ausführungsbeispiel - vergleiche Figur 9 - sind die Anschlagplatten als rechte Winkel ausgebildet, die mit ihrem in Figur 8 sichtbaren axial und radial verlaufenden Schenkel die Anschlagfunktion zwischen Messer und Messerträger übernehmen, während ihr um 90° abgewinkelter Schenkel am Messerträger montiert ist, insbesondere - vergleiche Figur 5 - mittels eines Zapfens 3a derart, dass dieser Schenkel zwischen zwei Hälften des Messerkopfes gefangen ist.

Damit der erfindungsgemäße Bajonett-Verschluss nicht durch Schnittgut, aufgewirbelte Erde und dergleichen verstopft wird, ist erfindungsgemäß zwischen Messerträger und Messerbalken ein umlaufender Dichtungsring 7 vorgesehen. Dem gleiche Zwecke dient ein Dichtungsring 8 zwischen dem Druckknopf 5 und dem Messerträger. Gegebenenfalls ist auch eine Abdichtung im Bereich der Schlitze 14a bis 14c zweckmäßig.

Schließlich liegt es im Rahmen der Erfindung, den Messerträger mit Federelementen zu bestücken, die den Messerbalken in Axialrichtung beaufschlagen und dadurch eine absolut spielfreie Lagerung in den Schlitzen 14a bis 14c gewährleisten.

Vorstehend ist die Erfindung am Beispiel eines einteiligen Messerbalkens beschrieben worden. Selbstverständlich liegt aber auch eine mehrteilige Messerkonstruktion im Rahmen der Erfindung. Beispielsweise könnte der zentrale Bereich des Messerbalkens mit der Bohrung 2 und den am Bohrungsumfang angeordneten Aussparungen und Vorsprüngen durch eine ringartige Scheibe gebildet sein, an der dann separate, radial abstehende Messer befestigt sind.

Auch liegt es im Rahmen der Erfindung, den Bajonett-Verschluss nicht nur bei Rasenmähern, sondern auch bei vergleichbaren Schneid- oder Verkleinerungsvorrichtungen einzusetzen, wenn es dort auf einen schnellen und bequemen Messeraustausch ankommt.

## Patentansprüche

1. Schneidvorrichtung, insbesondere Rasenmäher, mit mindestens einem umlaufenden Messer (1), das mittels einer schraubenlosen, lösbaren Verbindung an einem rotierenden, motorisch angetriebenen Messerträger (3) montiert ist, wobei diese Verbindung durch Relativdrehung zwischen Messer (1) und Messerträger (3) lösbar ist, und die Verbindung zwischen dem zumindest einem Messer (1) und seinem Messerträger (3) durch einen zentral angeordneten Bajonett-Verschluss (2a bis f; 14a bis c) erfolgt und dieser Bajonettverschluss durch zumindest ein zusätzliches Verriegelungselement (5) in der Geschlossenstellung arretierbar ist,
**dadurch gekennzeichnet,**
**dass** das Verriegelungselement (5) in seiner einen Stellung die Relativdrehung zwischen Messer (1) und Messerträger (3) blockiert, in seiner anderen Stellung die Relativdrehung hingegen freigibt.

2. Schneidvorrichtung nach Anspruch 1,
**dadurch gekennzeichnet,**
**dass** das Verriegelungselement (5) als im Messerträger (3) federnd gelagerter Druckknopf ausgebildet ist, der in entgegen der Federkraft eingedrückter Stellung die Relativdrehung zwischen Messer und Messerträger (3) freigibt

3. Schneidvorrichtung nach Anspruch 1,
**dadurch gekennzeichnet,**
**dass** die Relativdrehung zwischen Messer (1) und Messerträger (3) zur Freigabe des Messers in Schneidrichtung des Messers erfolgt.

4. Schneidvorrichtung nach Anspruch 1,
**dadurch gekennzeichnet,**
**dass** das Messer (1) als Messerbalken ausgebildet ist, der in seinem Zentrum mit dem Bajonett-Verschluss (2a bis 2f; 14a bis 14c) zusammenwirkt.

5. Schneidvorrichtung nach Anspruch 4,
**dadurch gekennzeichnet,**
**dass** der Messerbalken in seinem Zentrum eine Öffnung (2) mit radialen Aussparungen (2a bis 2c) bzw. radialen Vorsprüngen (2d bis 2f) aufweist, von denen zumindest eine Aussparung und/oder ein Vorsprung mit dem Verriegelungselement (5) zusammenwirkt.

6. Schneidvorrichtung nach Anspruch 1,
**dadurch gekennzeichnet,**
**dass** das Verriegelungselement (5) eine Dichtung (8) gegenüber dem Messerträger (3) aufweist.

7. Schneidvorrichtung nach Anspruch 1,
**dadurch gekennzeichnet,**
**dass** zwischen Messer (1) und Messerträger (3) eine Dichtung (7) angeordnet ist.

8. Schneidvorrichtung nach Anspruch 1,
**dadurch gekennzeichnet,**
**dass** zwischen Messer (1) und Messerträger .(3) in Umfangsrichtung wirksame Anschlagplatten (10a, 10b, 10c) angeordnet sind.

## Claims

1. Cutting apparatus, in particular a lawnmower, comprising at least one rotating blade (1) which is mounted on a rotating motor-driven blade support (3) by a screwless releasable connection, wherein this connection can be released by a relative rotation between the blade (1) and the blade support (3), wherein the connection between the at least one blade (1) and the blade support (3) thereof comprises a centrally disposed bayonet closure (2a to 2f; 14a to 14c) and the bayonet closure can be locked in a closed position by at least one additional locking element (5), **characterised in that** in one position the locking element (5) blocks the relative rotation between the blade (1) and the blade support (3) but in the other position it enables the relative rotation.

2. Cutting apparatus as claimed in Claim 1, **characterised in that** the locking element (5) is constructed as a push button which is resiliently mounted in the blade support (3) and which in a position in which it is pushed in against the spring tension enables the relative rotation between the blade and the blade support (3).

3. Cutting apparatus as claimed in Claim 1, **characterised in that** the relative rotation between the blade (1) and the blade support (3) for release of the blade takes place in the cutting direction of the blade.

4. Cutting apparatus as claimed in Claim 1, **characterised in that** the blade (1) is constructed as a blade bar which co-operates in its centre with the bayonet closure (2a to 2f; 14a to 14c).

5. Cutting apparatus as claimed in Claim 4, **characterised in that** the blade bar has in its centre an opening (2) with radial cutouts (2a to 2c) and/or radial projections (2d to 2f), of which at least one cutout and/or projection co-operates with the locking element (5).

6. Cutting apparatus as claimed in Claim 1, **characterised in that** the locking element (5) has a seal (8) against the blade support (3).

7. Cutting apparatus as claimed in Claim 1, **characterised in that** a seal (7) is disposed between the blade (1) and the blade support (3).

8. Cutting apparatus as claimed in Claim 1, **characterised in that** stop plates (10a, 10b, 10c) acting in the peripheral direction are disposed between the blade (1) and the blade support (3).

## Revendications

1. Dispositif de coupe, notamment tondeuse à gazon, comprenant au moins une lame (1) rotative qui est montée au moyen d'un assemblage amovible sans vis sur un support de lame (3) rotatif entraîné par un moteur, ledit assemblage pouvant être défait par une rotation relative entre lame (1) et support de lame (3), et la liaison entre la au moins une lame (1) et son support de lame (3) étant réalisée au moyen d'un emboîtement à baïonnette (2a à f ; 14a à c) disposé au centre, et cet emboîtement à baïonnette pouvant être bloqué en position fermée par au moins un élément de verrouillage supplémentaire (5), **caractérisé en ce que**, dans une de ses positions, l'élément de verrouillage (5) bloque la rotation relative entre la lame (1) et le support de lame (3), alors que, dans l'autre position, il permet la rotation relative.

2. Dispositif de coupe selon la revendication 1, **caractérisé en ce que** l'élément de verrouillage (5) est conçu en tant que bouton-poussoir monté avec ressort dans le support de lame (3), qui permet la rotation relative entre la lame et le porte-lame (3) lorsqu'il est enfoncé en vainquant la force élastique.

3. Dispositif de coupe selon la revendication 1, **caractérisé en ce que** la rotation relative entre la lame (1) et le support de lame (3) qui est destinée à libérer la lame s'effectue dans le sens de coupe de la lame.

4. Dispositif de coupe selon la revendication 1, **caractérisé en ce que** la lame (1) est réalisée en tant que barre porte-lame qui coopère en son milieu avec l'emboîtement à baïonnette (2a à f ; 14a à c).

5. Dispositif de coupe selon la revendication 4, **caractérisé en ce que** la barre de coupe présente en son milieu une ouverture (2) dotée d'évidements radiaux (2a à 2c) et de saillies radiales (2d à 2f), dont au moins un évidement et/ou une saillie coopère avec l'élément de verrouillage (5).

6. Dispositif de coupe selon la revendication 1, **caractérisé en ce que** l'élément de verrouillage (5) présente une garniture d'étanchéité (8) par rapport au support de lame (3).

7. Dispositif de coupe selon la revendication 1, **caractérisé en ce qu'**une garniture d'étanchéité (7) est placée entre la lame (1) et le support de lame (3).

8. Dispositif de coupe selon la revendication 1, **caractérisé en ce que** des plaquettes de butée (10a, 10b, 10c) agissant dans la direction périphérique sont disposées entre la lame (1) et le support de lame (3).
